# EUROPÄISCHE PATENTANMELDUNG

(11) **EP 1 154 187 A2**
(43) Veröffentlichungstag der Anmeldung: **14.11.2001**
(21) Anmeldenummer: 01110537.6
(22) Anmeldetag: 28.04.2001
(51) Int. Cl.: F16L 33/207

(54) **Pressfitting für Kunststoff-Verbundrohre**

(30) Priorität: 10.05.2000 DE 10022893
(71) Anmelder: Schütz GmbH & Co. KGaA, 56242 Selters (DE)
(72) Erfinder: Schütz, Udo, 56242 Selters / Ww. (DE)
(74) Vertreter: Pürckhauer, Rolf, Dipl.-Ing.

(57) **Zusammenfassung**

Das Preßfitting (1) weist einen Stützansatz (5) auf, der das Ende eines Kunststoff-Verbundrohres (7) aufnimmt. Eine Außenumfangsrippe (2) des Fittings (1) ist mit zwei diametral gegenüberliegenden Ausnehmungen (3) versehen. Ein Isolierring (12) aus Kunststoff ist nach Art einer gewölbten Federscheibe in Richtung zum Verbundrohr (7) zweimal konvex gewölbt. In der Mitte jeder konvexen Wölbung ist eine achsparallele Zunge (15) einstückig angeformt, die in die zugehörige Ausnehmung (3) der Außenumfangsrippe (2) eingreift und bei völlig eingeschobenem Verbundrohr (7) in axialer Richtung aus der Ausnehmung (3) der Außenumfangsrippe (2) herausragt. Dadurch wird die richtige Stellung des Verbundrohres (7) sichtbar und fühlbar angezeigt. Der Isolierring (12) verhindert außerdem einen direkten Kontakt der Aluminium-Metallschicht (11) des Verbundrohres (7) mit dem aus Messing bestehenden Pressfitting (1).

## Beschreibung

Die Erfindung bezieht sich auf ein Pressfitting für Kunststoff-Verbundrohre, die aus einer Innenschicht und einer Außenschicht aus Kunststoff und einer Mittelschicht aus Metall, vorzugsweise Aluminium, bestehen, wobei das Fitting einen Stützansatz aufweist, auf den das Ende des Verbundrohres gegen einen Isolierring aus Kunststoff und einen Außenbund des Fittings aufschiebbar und durch eine Preßhülse fixierbar ist

Aus der DE 44 41 373 C2 bekannte Preßfittings dieser Art werden zum Anschließen von Kunststoff-Verbundrohren an Armaturen verwendet. Der Außenbund dieses bekannten Preßfittings ist im Axialschnitt gesehen L-förmig ausgebildet, wobei der achsparallel verlaufende freie Schenkel des Außenbundes an mehreren Stellen jeweils eine Ausnehmung aufweist, die sich radial erstreckt und eine Sichtkontrolle des bis zum Anschlag (Bund) auf eine Stützhülse aufgeschobenen Kunststoff-Verbundrohres ermöglicht. Um diese radialen Ausnehmungen gegen Verschmutzung zu schützen, müßte dieser Bereich durch einen entsprechenden transparenten Kunststoffring abgedeckt werden. Die Transparenz eines solchen Ringes, der in der DE 44 41 373 C2 allerdings nicht erwähnt ist, ist notwendig wegen der erwünschten Sichtkontrolle der Einschubstellung des Verbundrohres. Dennoch ist die Sichtkontrolle durch diesen Ring insbesondere an unzugänglichen Einbauorten stark behindert.

Der weitere Nachteil dieses bekannten Preßfittings, daß die Aluminiumschicht des Kunststoff-Metall-Verbundrohres mit dem in der Regel aus Messing bestehenden Fitting in Berührung kommt, was zur Verhinderung von Korrosion vermieden werden sollte, wird bei einer abdichtenden Verbindung von Kunststoff-Metall-Kunststoff-Verbundrohren nach der EP 0 611 911 A1 durch ein ringförmiges Kunststoffteil vermieden, das auf das Ende der Presshülse aufgerastet wird und so ausgebildet ist, daß es mit einem Innenflansch die Stirnfläche des Verbundrohres abdeckt und somit einen Kontakt der an der Stirnfläche des Verbundrohres freiliegenden Metalleinlage mit dem Messingfitting verhindert. Bei dieser Ausführungsform ist jedoch eine Sichtkontrolle des richtigen Sitzes des Verbundrohres am Anschlag des Fittings nicht möglich.

Der Erfindung liegt die Aufgabe zugrunde, ein Preßfitting für Kunststoff-Verbundrohre zu entwickeln, das sowohl die Sichtkontrolle des richtigen Sitzes des Verbundrohres zwischen Fitting und Presshülse als auch eine Isolierung zwischen der Stirnfläche des Verbundrohres und dem Fitting ermöglicht.

Diese Aufgabe ist erfindungsgemäß gelöst durch ein Preßfitting mit den Merkmalen des Patentanspruchs 1.

Die Unteransprüche beinhalten vorteilhafte und zweckmäßige Weiterbildungen der Erfindung.

Die erfindungsgemäße Ausbildung des Pressfittings ermöglicht in jeder Lage eine gut sichtbare und ggf. sogar fühlbare Kontrolle des richtigen Sitzes des Verbundrohres zwischen Fitting und Presshülse, wenn der federnde Isolierring aus Kunststoff , der wie eine Federscheibe vorgebogen ist, durch das eingeschobene Verbundrohr flachgedrückt wird, so daß die Zungen in axialer Richtung aus den Ausnehmungen der Außenumfangsrippe des Fittings sichtbar und fühlbar herausragen. Dabei ist auch ohne weiteres erkennbar, wenn bei weiterer Bearbeitung der Rohrverbindung, z.B. bei Einleitung des Pressvorgangs, das Verbundrohr gegenüber dem Fitting verrutschen sollte. Zudem verhindert der Isolierring einen direkten Kontakt der Stirnfläche des Verbundrohres mit dem Fitting.

Ein Ausführungsbeispiel des erfindungsgemäßen Pressfittings ist in der Zeichnung dargestellt. Dabei zeigt
- Fig. 1: einen Längsschnitt des Fittings mit noch nicht vollständig eingeschobenem Verbundrohr,
- Fig. 2: einen Schnitt nach der Linie II-II in Fig. 1,
- Fig. 3: den Längsschnitt nach Fig. 1 mit vollständig eingeschobenem, aber noch nicht verpresstem Verbundrohr,
- Fig. 4: im Längsschnitt das Fitting ohne Verbundrohr,
- Fig. 5: den Längsschnitt nach Fig. 4 um 90° verdreht,
- Fig. 6: in perspektivischer Darstellung das Fitting ohne Presshülse und Verbundrohr und
- Fig. 7: in perspektivischer Darstellung den Isolierring des Preßfittings.

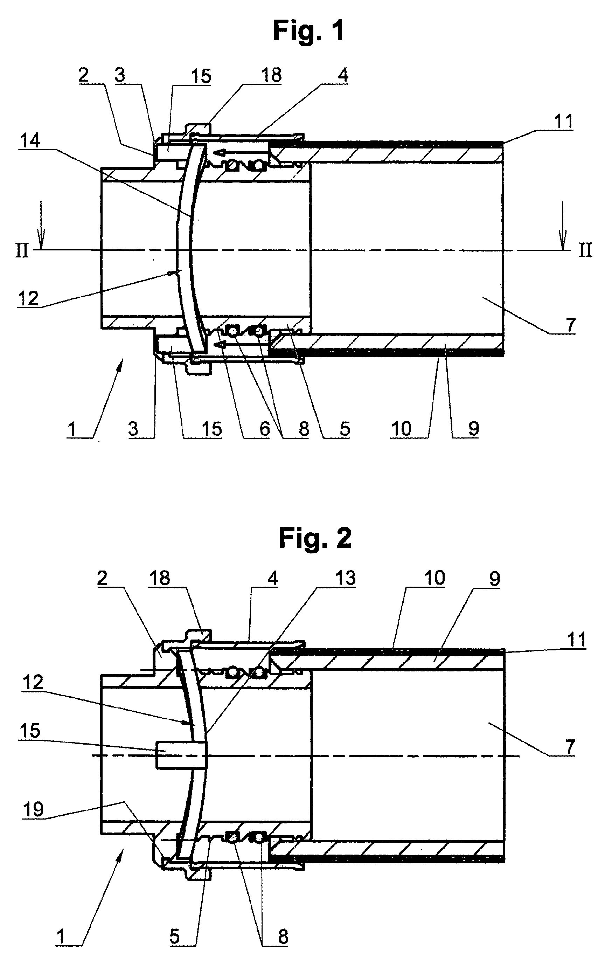

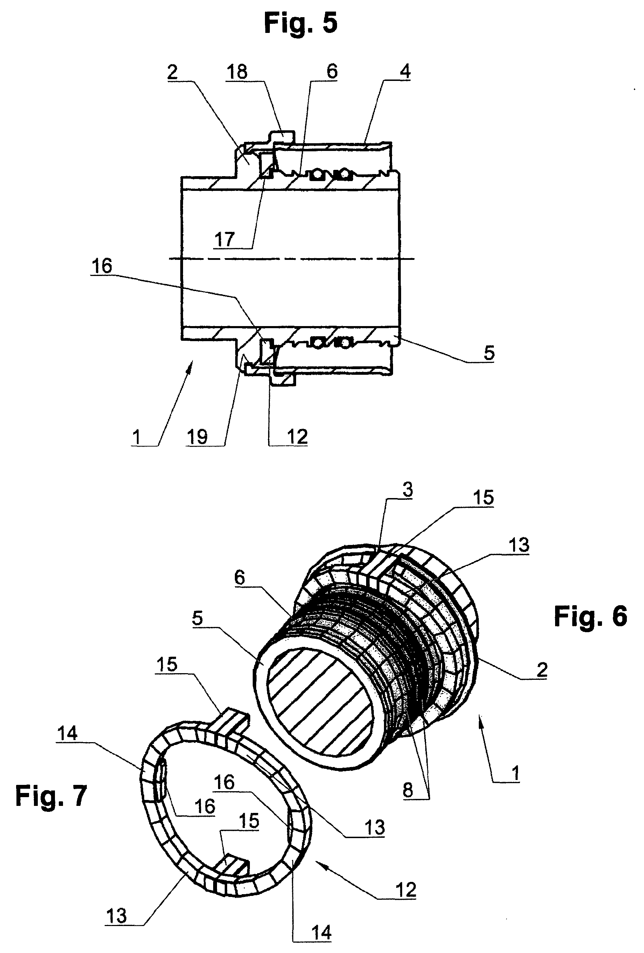

Das Pressfitting 1 aus Messing gemäß den Fign. 1 und 6 weist eine Außenumfangsrippe 2 mit Ausnehmungen 3 auf. Zum Pressfitting 1 gehört ferner eine Presshülse 4 aus Metall, z.B. Aluminium, die in den einzelnen Zeichnungsfiguren in unverpresstem Zustand dargestellt ist.

Ein Stützansatz 5 des Fittings 1 weist, wie üblich, Umfangsrillen 6 auf, in die ein Kunststoff-Verbundrohr 7 beim Verpressen der Presshülse 4 formschlüssig eingedrückt wird. In einigen Umfangsrillen 6 können Dichtringe 8 eingelegt sein. In Fig. 1 ist das Verbundrohr 7, das eine innere Kunststoffschicht 9 und eine äußere Kunststoffschicht 10 sowie eine Zwischenschicht 11 aus Metall, z.B. Aluminium, aufweist, noch nicht ganz auf den Stützansatz 5 des Fittings 1 aufgeschoben.

Zwischen dem Stützansatz 5 und der Presshülse 4 des Preßfittings 1 ist ein Isolierring 12 vorgesehen, der aus Kunststoff nach Art einer mehrfach gewölbten Federscheibe vorgebogen ist, und zwar so, daß zwei in Richtung zum Verbundrohr 7 konvexe Wölbungen 13 und zwei in Richtung zum Verbundrohr 7 konkave Wölbungen 14 vorhanden sind. In der Mitte der konvexen Wölbungen 13 sind achsparallele Zungen 15 einstückig angeformt. In der Mitte der konkaven Wölbungen 14 sind radial nach innen einstückig angeformte Ansätze 16 am Isolierring 12 vorgesehen, die in eine separate Außenumfangsnut 17 des Stützansatzes 5 eingreifen und den Isolierring 12 vor der Montage der Rohrverbindung unverlierbar halten. Den Bereich des Isolierringes 12 und einen Endbereich der Presshülse 4 überdeckt ein Kunststoffring 18, der in eine Außenumfangsnut 19 der Außenumfangsrippe 2 des Fittings 1 eingerastet ist.

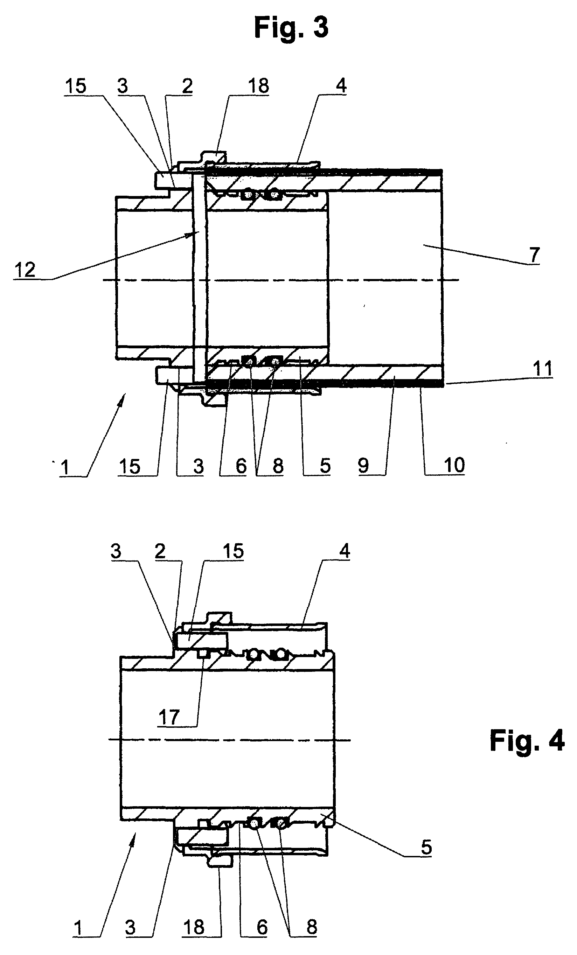

Wie Fig. 3 zeigt, wird der Isolierring 12, der, wie eingangs bereits erwähnt, einen direkten Kontakt der Stirnseite des Verbundrohres 7 mit dem aus Messing bestehenden Pressfitting 1 verhindert, durch das völlig eingeschobene Verbundrohr 7 plattgedrückt , so daß die Zungen 15 durch die Ausnehmungen 3 der Außenumfangsrippe 2 hindurch nach außen herausragen, was anzeigt, daß das Verbundrohr 7 zum Verpressen richtig eingesetzt ist. Sollte bei weiterer Montage der Rohrverbindung, z.B. beim Einleiten des Pressvorganges, das Verbundrohr 7 etwas verrutschen, so ist dies an den Zungen 15 leicht zu erkennen und kann somit korrigiert werden. Ein Einblick, wie beim Stand der Technik, ist dabei nicht erforderlich und auch vielfach nicht möglich. In manchen Fällen kann man sogar mit den Fingern fühlen, ob die Zungen 15 mit vorgesehenem Maß aus den Ausnehmungen 3 der Außenumfangsrippe 2 herausragen und damit das Verbundrohr 7 in seiner richtigen Stellung sitzt.

## Patentansprüche

1. Pressfitting für Kunststoff-Verbundrohre, die aus einer Innenschicht und einer Außenschicht aus Kunststoff und einer Mittelschicht aus Metall, vorzugsweise Aluminium, bestehen, wobei das Fitting einen Stützansatz aufweist, auf den das Ende des Verbundrohres gegen einen Isolierring aus Kunststoff und einen Außenbund des Fittings aufschiebbar und durch eine Preßhülse fixierbar ist, **dadurch gekennzeichnet, daß** eine Außenumfangsrippe (2) des Fittings (1) zwei diametral gegenüberliegende Ausnehmungen (3) aufweist und daß der Isolierring (12) aus Kunststoff nach Art einer gewölbten Federscheibe in Richtung zum Verbundrohr (7) zweimal konvex und zweimal konkav gewölbt ist, wobei in der Mitte jeder konvexen Wölbung (13) des Isolierringes (12) jeweils eine achsparallele Zunge (15) einstückig angeformt ist, die in eine der Ausnehmungen (3) der Außenumfangsrippe (2) des Fittings (1) eingreift und bei zwischen dem Stützansatz (5) und der Presshülse (4) bis zum Anschlag eingeschobenem Verbundrohr (7) auf der diesem abgewandten Seite der Außenumfangsrippe (2) teilweise aus der zugehörigen Ausnehmung (3) in achsparalleler Richtung herausragt.

2. Pressfitting nach Anspruch 1, **dadurch gekennzeichnet, daß** der Isolierring (12) an den in Richtung zum Verbundrohr (7) konkaven Wölbungen (14), d.h. um 90° zu den Zungen (15) versetzt, nach innen radial vorstehende Ansätze (16) aufweist, die den Isolierring (12) vor der Montage der Rohrverbindung in einer Außenumfangsnut (17) des Stützansatzes (5) des Fittings (1) unverlierbar halten.

3. Pressfitting nach Anspruch 1 oder 2, **gekennzeichnet durch** einen den Bereich des Isolierringes (12) und einen Endbereich der Presshülse (4) abdeckenden Kunststoffring (18), der in einer Außenumfangsnut (19) der Außenumfangsrippe (2) des Fittings (1) eingerastet ist.
